# EUROPEAN PATENT SPECIFICATION

(11) **EP 1 451 819 B1**
(45) Date of publication and mention of the grant of the patent: **12.09.2007**
(21) Application number: 02786066.7
(22) Date of filing: 09.12.2002
(51) Int. Cl.: G11B 19/02

(54) **RECORDING/REPRODUCING APPARATUS AND RECORDING/REPRODUCING METHOD**
AUFZEICHNUNGS/WIEDERGABEGERÄT UND AUFZEICHNUNGS/WIEDERGABEVERFAHREN
APPAREIL D'ENREGISTREMENT/LECTURE ET PROCEDE D'ENREGISTREMENT/LECTURE

(30) Priority: 10.12.2001 JP 2001375735
(43) Date of publication of application: 01.09.2004
(73) Proprietor: MATSUSHITA ELECTRIC INDUSTRIAL CO., LTD, Kadoma-shi, Osaka 571-0050 (JP)
(72) Inventor: KAWASAKI, Masahiro, Hiroshima-shi, Hiroshima 731-5106 (JP); IMADA, Masayuki, Hiroshima-shi, Hiroshima 734-0022 (JP); SUETOMO, Tohru, Higashihiroshima-shi, Hiroshima 739-0036 (JP)
(74) Representative: Dempster, Benjamin John Naftel
(86) International application number: PCT/JP2002/012874
(87) International publication number: WO 2003/050809

(56) References cited:
- EP-A- 1 024 495
- EP-A- 1 126 462

## Description

### Technical Field

The present invention relates to a recording/ reproducing apparatus for recording/reproducing moving pictures, speech or the like.

### Background Art

Conventionally, a video tape recorder using tape media was typical as an apparatus for recording/reproducing TV broadcasting in a home. In recent years, a rapid spread has been progressed, of DVD recorders and hard disk recorders using disk media such as optical disks and hard disks.

By using disk media, no necessity arises for rewinding as performed in using tape media. Furthermore, with the use of disk media, it has become a possible reality to view recorded programs in the order desired by a user, to delete a program already enjoyed and others. In a recording/reproducing apparatus using tape media, no function is available to delete a previously recorded program and a different program is overwritten to thereby actually delete the previously recorded program.

In a recording/reproducing apparatus using disk media, data related to programs are managed in files each as unit; therefore, a previously recorded program can be deleted by rewriting its file management information thereon. The recording/reproducing apparatus is classified into two types; one to manage one program as one file and the other to manage a plurality of programs as one file (for example, a DVD recorder using DVD-RAM media). In the latter type, however, a management is performed at an equal level to a case where one program is managed as one file within one file, for example, as to from where a program has been recorded in one file. Therefore, in the following description, regardless of the two types of management, description will be given of a conventional recording/reproducing apparatus as a case where a recording/ reproducing apparatus using disk media manages one program as one file. Note that the terms "program" and "file" will be used in some cases without specific distinction therebetween. Moreover, in relation with description of a scene where a program is recorded, there are some cases where the terms "recording" and " image recording" will be used without specific distinction.

First of all, in a case where a file recorded in disk media is desired to be deleted, for example, a navigation button included in an operating means such as a remote controller, for example, is depressed. Note that other buttons described below are also included in the operating means.

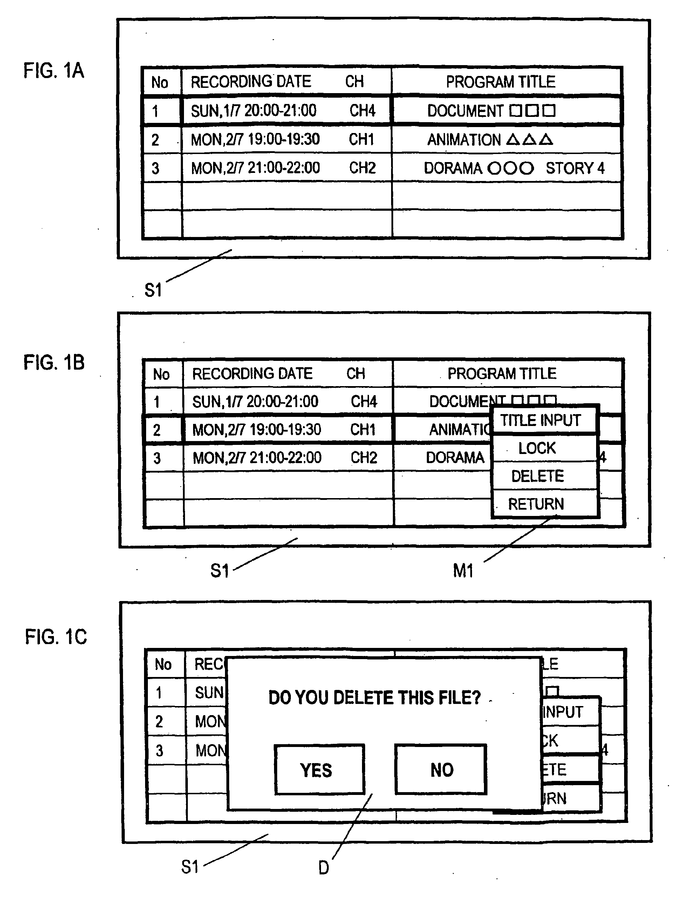

With depression of the button, since a title list screen image S1 of previously recorded programs is displayed as shown in Fig. 1A, "program desired to be deleted" is selected with a cursor button among them, followed by depression of a determination button. For example, in a case where a program recorded in the second place "animation" is desired to be deleted, the cursor button (bottom button) is depressed once for selecting the program "animation," followed by depression of the determination button. Then, when a menu M1 is displayed as shown in Fig. 1B, the cursor button (bottom button) is depressed twice for selecting a menu item in the third place by counting from the top, followed by depression with the determination button.

With depression of the button, a dialogue is displayed for issuing an inquiry concerning whether or not the file maybe deleted. In an ordinary case, the cursor is in a state to select "NO" in order to prevent a file from being deleted by mistake. Therefore, by further depressing the cursor to select "YES", thereafter, the determination button is depressed.

In this example, in order to delete a program, the button of the remote controller is depressed 8 times in total (including the navigation button 1 time → the cursor button 1 time → the determination button 1 time → the cursor button 2 times → the determination 1 time → the cursor button 1 time → the determination button 1 time).

Note that as to deletion of speech data, description is available in Japanese Unexamined Patent Publication No. 2001-67838 or Japanese Unexamined Patent Publication No. 2002-162997, for example.

Furthermore, in a case where a program recorded on tape media is held, new writing is inhibited by breaking a safety lug of a tape media cover. There is provided a similar lug in a cover of DVD-RAM, whereby all of the media can be inhibited for new writing. In DVD-RW and a hard disk, however, no such method can be adopted for write inhibition. Disk media including DVD-RW are contrived so as to enable writing to be inhibited (hereinafter, referred to as "protect") in software.

Setting of protect can be performed in files each as a unit in a similar manner to the deletion. That is, the navigation button is depressed to display the title list screen image S1 and "a file desired to be protected" is selected with the cursor button, followed by depression with the determination button. Since, with the operations, the menu M1 is displayed, "lock" is selected with the cursor button among them, followed by depression of the determination button. Then, when a dialogue to issue an inquiry related to whether or not the file may be protected, the cursor is further depressed to thereby place the cursor in a state to select "YES" since the cursor is in a state to select "NO", followed by depression with the determination button. In such a way, a file of interest can be protected.

As described above, in a conventional recording/ reproducing apparatus, a user was required for a great lot of a procedure performed to delete a program or to protect it.

In order to solve such a problem, a recording/ reproducing apparatus is conceived in which a button exclusively used for deletion called a delete button is provided and when a title desired to be deleted is selected, followed by depression with the delete button, a display is presented of a dialogue for issuing an inquiry related to whether or not the file may be deleted. According to such a recording/reproducing apparatus, a procedure can be omitted in which "delete" is selected in the menu M1 as shown in Fig. 1B.

Similarly, a recording/reproducing apparatus is also conceived in which a button exclusively used for protect called a lock button is provided and when a title of a program desired to be protected is selected, followed by depression with the lock button, a dialogue is displayed for inquiring concerning whether or not the file may be protected.

Even in the above cases, however, since a necessity still arises for a great lot of a procedure to delete a program or to protect it, the above problem is hard to say having been perfectly solved by such recording/reproducing apparatuses. In addition, with the inventions described in the patent publications adopted, much of a procedure is required in deletion when reproduction ends.

Especially, in a recording/reproducing apparatus using disk media such as DVD recorders, chances to delete programs increase. This is because, well used in a DVD recorder or a hard disk recorder is a function of chasing reproduction to reproduce, a program during recording of programs of news and sports. As for programs with intense immediateness such as news or sports, there is a tendency that once a program of the kinds has been viewed and heard, a limited capacity of disk media is directed to use to record other programs with a higher priority to new programs over holding the program already viewed and heard. Therefore, the chasing reproduction is used to delete almost all of the programs already viewed and heard by users. If chances to delete programs increase, the above problem becomes the more serious.

### Disclosure of Invention

According to one aspect of the invention there is provided a recording/reproducing apparatus comprising: a detecting unit operable to detect the end of reproduction of a recorded file; and an inquiry issuing unit, when the detecting unit detects the end of reproduction of the file, to issue an inquiry related to deletion of the file to a user.

In such a way, the user has only to issue an instruction for the inquiry and thereby can perform deletion of the file in a simple and convenient manner.

There is a case where the recording/reproducing apparatus of the invention includes: a unit, in a case where an instruction to delete a file is received from a user for an inquiry, adding delete schedule information indicating that deletion of the file is scheduled to file management information to manage files which have been recorded; and a screen image output processing unit controlling whether or not a file to which the delete schedule information has been set is displayed in a list.

When a file to which delete schedule information has been set is not displayed in a list under control of the screen image output processing unit, the file is deleted outwardly when viewed from the user. Since actual deletion of the file may be performed at some time later, the file can be revived if the user has deleted by mistake. When a file is revived, only a file to which delete schedule is set is displayed in a list or the like, and the user has only to select it in the list. In other equipment in which no control by the screen image output processing unit is not performed, a file to which delete schedule information is set is also displayed, thereby enabling flexibility for disposing a file in the equipment to be ensured.

In this case, the recording/reproducing apparatus may be provided with a deleting unit deleting a file to which the delete schedule information has been set on the basis of at least one of a priority level of deletion and a free capacity in a storage medium in which file are stored.

With provision of the deleting unit, a file can be deleted when required that has been outwardly deleted but has not actually been deleted yet. Therefore, a sufficient possibility of revival of a file can be ensured in a range of a limited capacity of a storage medium.

The present invention provides not only a recording/reproducing apparatus, but also a recording/reproducing method. In the recording/reproducing method, after a procedure detecting the end of reproduction of a file which has been recorded is performed, the end of reproduction of the file is detected, a procedure is implemented in which an inquiry related to deletion of the file is issued to the user.

Moreover, the present invention also provides a program for causing built-in equipment and a computer in which no function as a recording/reproducing apparatus is originally provided to work as a recording/reproducing apparatus. The program is distributed through an electrical communication line such as the Internet and in a state where it has been recorded in a computer-readable storage medium such as CD-ROM.

### Brief Description of Drawings

Figs. 1A, 1B and 1C show a conventional procedure for file deletion;
Fig. 2 is a schematic functional block diagram of a recording/reproducing apparatus in a first or second embodiment;
Fig. 3 is a flowchart when reproduction of a file ends in the present invention;
Fig. 4 is a flowchart when reproduction of a file ends in a conventional practice;
Figs. 5A and 5B show an example of a dialogue D displayed when reproduction of a file ends in the present invention;
Fig. 6 is a flowchart when reproduction of a file ends in the present invention;
Fig. 7 is a schematic functional block diagram of a recording/reproducing apparatus in a third embodiment;
Fig. 8 shows an example of a recording reservation setting screen image in the present invention; and
Fig. 9 is a schematic functional block diagram of a recording/reproducing apparatus in a fourth embodiment.

### Best Mode for Carrying Out the Invention

Hereinafter, detailed description will be given of embodiments of the present invention according to the drawings.

### (First Embodiment)

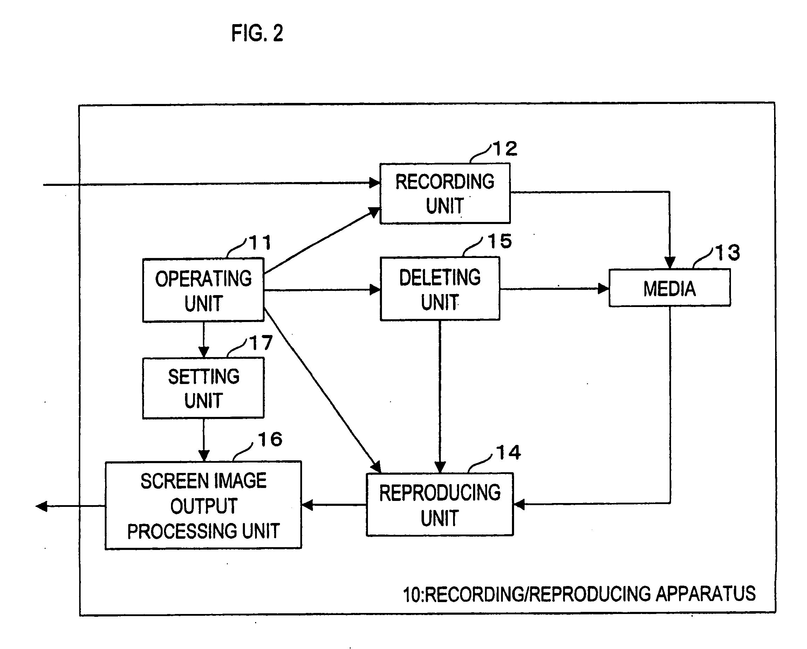

Fig. 2 is a schematic functional block diagram of a recording/reproducing apparatus 10 in this embodiment and a construction thereof will be described together with operations therein. Note that in the following description, a situation is considered where programs are recorded in file formats in a disk media (hereinafter, simply referred to as "media") 13 by a recording unit 12.

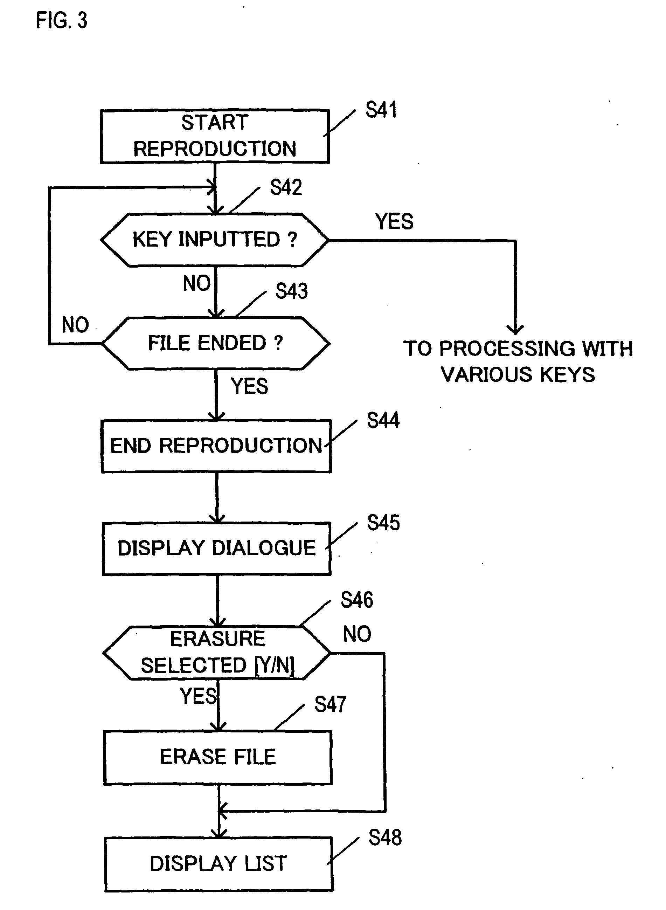

At first, when a user issues an instruction so as to reproduce a program which has been recorded, using an operating unit 11 such as a remote controller or the like, a reproducing unit 14 which has received this instruction reads file management information recorded in a specific position on the media 13 to investigate from what position on the media 13 a file of interest is recorded. When a position where the file of interest is recorded is found, reading of data starts from the position and the read data is transferred to a screen image output processing unit 16 (Fig. 3, step S41).

In a case where the recording/reproducing apparatus 10 is a DVD recorder or a hard disk recorder, the data read from the media 13 is compressed in the MPEG 2 scheme; therefore there is a necessity for passing the data through a MPEG 2 decoder to expand the data, but such a technique has no direct relation to the present invention, and none of description thereof will be given herein.

Processing to read data from the media 13 continues till interruption of reproduction is instructed by a user's depression of a stop button or the like included in the operating unit 11 or till a reading position reaches the end of the file (Fig. 3, if YES in step S42 or if YES in step S43). It can be determined whether or not a reading position reaches the end of a file based on the file management information.

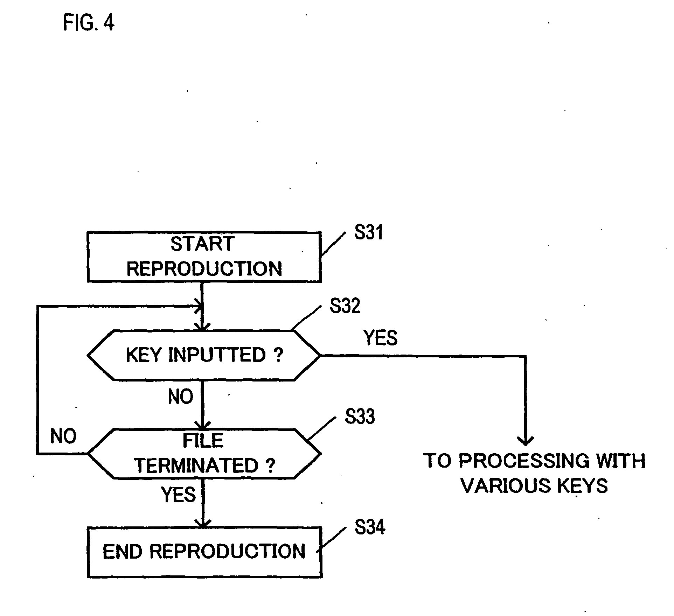

In this situation, conventionally, reproduction was ceased when a reading position reached the end of a file as shown in Fig. 4 (Fig. 4, step S31 → S32: if NO in S32 → S33: if YES in S33 → S34). There is a recording/reproducing apparatus continuing to display a wait screen image instead of no image on the screen when the reproduction ends. In this case, the wait screen image stays on the screen till an operation different from reproduction is started. In order to delete a file which has been reproduced, a user has to follow the procedure already described using Fig. 1.

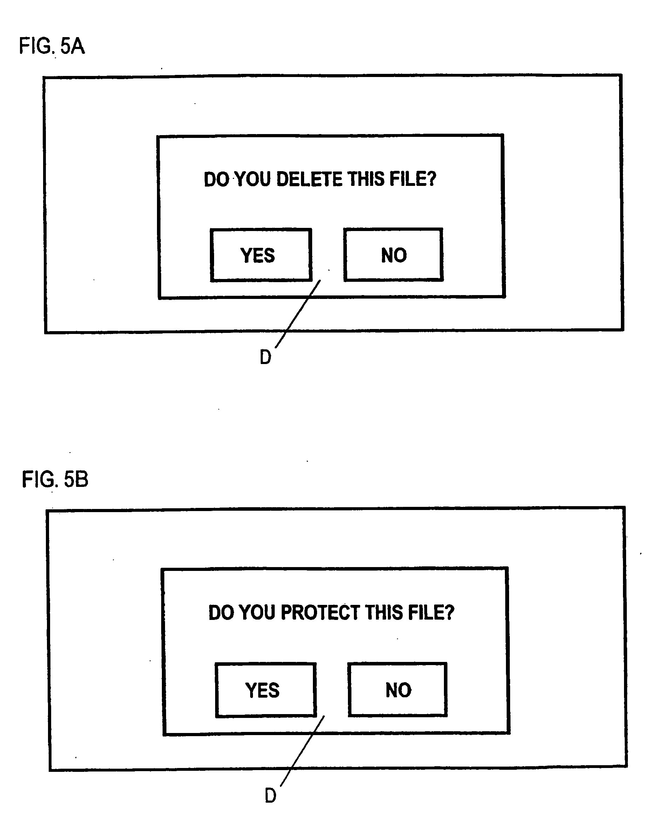

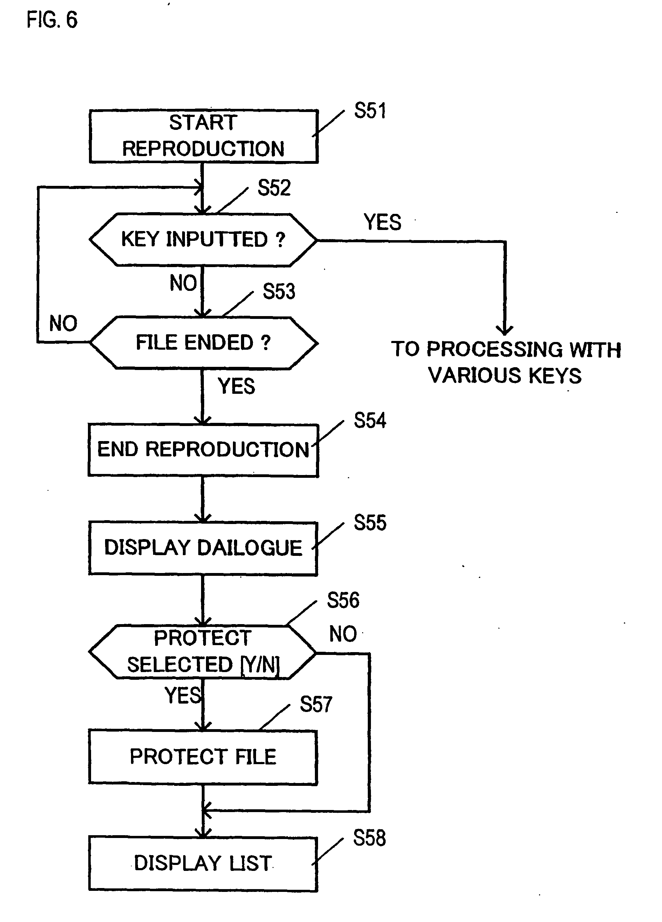

In contrast to this, the recording/reproducing apparatus 10 in this embodiment, when it is detected that a reading position reaches the end of a file, issue a user, as shown in Fig. 5A, an inquiry concerning whether or not the file just after being reproduced is deleted by displaying a message saying "Do you delete this file?" or the like on a dialogue D (Fig. 6, steps S44 → S45).

A unit detecting that a reading position reaches the ends of the file and reproduction of a file ends may be either the reproducing unit 14 or a unit different from the reproducing unit 14 . Furthermore, a unit issuing an inquiry to a user by displaying the dialogue D may be either the screen image output processing unit 16 or a unit different from the screen image output processing unit 16.

When the dialogue D, as described above, is displayed, the user selects "YES" if the file is desired to be deleted or "NO" if not to be deleted by using the cursor key and the determination key included in the operating unit 11. When it is detected that "YES" is selected, the deleting unit 15 deletes the file just after being reproduced (Fig. 3, if YES in Step S46 → S47).

Processing after deletion is not specifically limited in this way. That is, the process either may be kept in a screen image frozen state or may return to a title list screen image S1. This applies to processing after "NO" is selected in a similar manner (Fig. 3, if YES in step S47 → 548: if NO in step S46 → S48).

As described above, the recording/reproducing apparatus 10 issues an inquiry related to deletion of a file to a user when the reproduction ends. With such a procedure adopted, no necessity arises for a conventional cumbersome practice in which an operation is performed in which a title list screen image S1 for previously recorded programs is displayed, a "program desired to be deleted" is selected with the cursor button, followed by depression of the determination button, then when the menu M1 is displayed by depression of the determination button, "delete" is selected with the cursor button, again followed by depression of the determination button. Furthermore, since the user judges whether or not a file should be deleted after the contents of a program becomes familiar with on his or her side, an effect is exerted that he or she can avoid an inconvenience to delete, by mistake, a program to be stored.

Note that valid or invalid of a function of issuing an inquiry related to deletion of a file when reproduction ends as described above may be able to be freely set by a user with the operating unit 11 and setting unit 17. The setting unit 17 manages contents set by a user using the operating unit 11 for a setting item displayed by the screen image output processing unit 16. The recording/reproducing apparatus 10 determines whether or not an inquiry related to deletion of a file is issued based on contents of the setting or performing other operations. With such a procedure adopted, the above function can be set invalid at an initial stage of shipment in order to prevent a careless deletion of a file. Besides, when dissatisfaction is built up on the user side due to much of a procedure because of increase in familiarity with the operations, he or she can make the above function valid by his- or herself.

Moreover, the recording/reproducing apparatus 10 in this embodiment is provided with a function of displaying a list on a screen of only files whose deletion are scheduled. In this case, the screen image output processing unit 16 performs control of display of only files whose deletion is scheduled in a list. Then, when a user which has viewed the deletion schedule file list screen image issues a instruction to revive a file, the deleting unit 15 clears deletion schedule information on the file. Since the file whose deletion schedule information has been cleared is the same as an ordinary file, revival of a file can be actually achieved.

As described above, according to this embodiment, it is natural not only to enable a file to be deleted with ease but also to enable a file to be held but having been deleted by mistake to be revived.

Note that, though in the above description, no specific reference has been made, the deleting unit 15 deletes a file whose deletion to be scheduled with a priority higher than an ordinary file if a free capacity of the media 13 in which files are recorded decreases. In this case, a size of a file whose deletion is scheduled is not included in a free capacity of the media 13.

In a case where a plurality of files whose deletion is scheduled exist, it is only required to determine on what criteria the files are deleted (priority for deletion) based on items designated in image recording reservation (such as an image recording start time, an image recording end time, image recording mode and others). By referring to those information, it can be determined what amount of a free capacity is required to secure by when.

A construction may be adopted in which information on which a time of deletion schedule is expressed (hereinafter, referred to "deletion time information") is added to the file management information and deletion of a file is performed in the order of when a prescribed time elapses from recording of the file earlier than others. Moreover, a construction may be adopted in which deletion of files may be performed in the order in which a file having the earlier deletion schedule is deleted earlier so that a disk capacity required for recording when recording is performed or so that a prescribed disk capacity is ensured. Furthermore, a construction may be adopted in which a file larger in size or a file having a size closest to a disk capacity required is retrieved for deletion. It is reasonable that when a disk capacity required for image recording cannot be secured, all the files whose deletion is scheduled are deleted. With such procedures adopted, no inconvenience occurs that a file whose deletion is scheduled continues to exist on the media 13 for an unlimited period in the future.

Note that the deletion time is not necessary to include all of a year, a month, a date and an hour. For example, only a month and date may be included, or a deletion time may be a value of a timer provided in a system of the recording/reproducing apparatus 10.

Furthermore, a file whose deletion is scheduled may be deleted at the time when media 13 is exchanged, or at a time when a power supply of the recording/reproducing apparatus 10 is turned off or on. In the cases, the delete schedule information is not necessary to be recorded on the media 13 but may be held in only a memory of the recording/reproducing apparatus 10. As described above, if a period during which a file whose deletion is scheduled can be revived is a period during which a user who has designated the deletion schedule can grasp, a problem can be solved that a file which a user wrongly judged as having been deleted is revived and referred to by another person.

As a technique analogous to the above technique, there is available a function called a *"*trash box" included in an OS for a personal computer. In the trash box function, while management information for a file to which a delete has been instructed by a user is deleted, data thereof itself is moved to a special purpose directory in advance.

That is, even with the above trash box function adopted, a file to which deletion has been instructed can be revived by a user before a data amount of stored files in the special purpose directory exceeds a prescribed capacity. Therefore, a file deletion/revival function adopted by the present invention can also be thought to be analogous to a conventional art trash box function in the respect of possibility of revival.

When a file on the media 13 is deleted by the trash box function, a personal computer that supports no trash box function does not allow a file which has already been deleted to be viewed if being provided with the media 13. As described above, this is because, in the trash box function, management information on a file to which deletion has been instructed by a user is deleted and data thereof itself is moved to the specific purpose directory in advance. It is natural that a problem also arises that a personal computer that supports no trash box function cannot empty a trash box.

Therefore, in the present invention, a construction is employed in which revival of a file is realized by not only adding newly deletion schedule information to filemanagement information to realize file deletion, but also deleting the deletion schedule information from the file management information. With such a construction adopted, when a file, whose deletion is scheduled, and which has been recorded in the media 13 is observed from the DVD recorder that supports no file deletion/revival function adopted in the present invention, the file whose deletion is scheduled is regarded as an ordinary file that has not been deleted. Therefore, it is needless to say that the file whose deletion is scheduled can also be deleted from such a DVD recorder.

As described above, a file deletion/revival function adopted in the present invention is not a trash box function included in an OS used on a personal computer but rather close to a non-display function for a file. While there is also included a non-display function for a file using an extender or other attributes as a filter in an OS for a general purpose personal computer, it is a current reality that there is provided no function such as to delete a file when a disk is short of capacity, which is included in the present invention.

Note that while no specific reference is made in the above description, it may also be issued an inquiry to a user when the file is actually deleted in relation to whether or not deletion is actually performed or deletion is only outwardly performed as deletion schedule.

Furthermore, while in the above description, a title of a file whose deletion is scheduled is not displayed in a title list screen image S1, the present invention is not limited to this. That is, a file whose deletion is scheduled may also be displayed in the title list screen image S1 and in addition, cancellation of deletion schedule may also be performed through the title list screen image S1. In this case, however, in order to facilitate making a distinction between a file whose deletion is scheduled and an ordinary file, a mark indicating deletion schedule is attached in the vicinity of a displayed title of a file whose deletion is scheduled or other means is applied.

### (Third Embodiment)

In the above description, when the end of reproduction of a file is detected, an inquiry is issued in relation to whether or not the file is deleted. There may be one or more forms of an inquiry related to a file. In cases where inquiries shown in Figs. 5A and 5B are ordinarily performed, inquiries may also be performed in forms different from them.

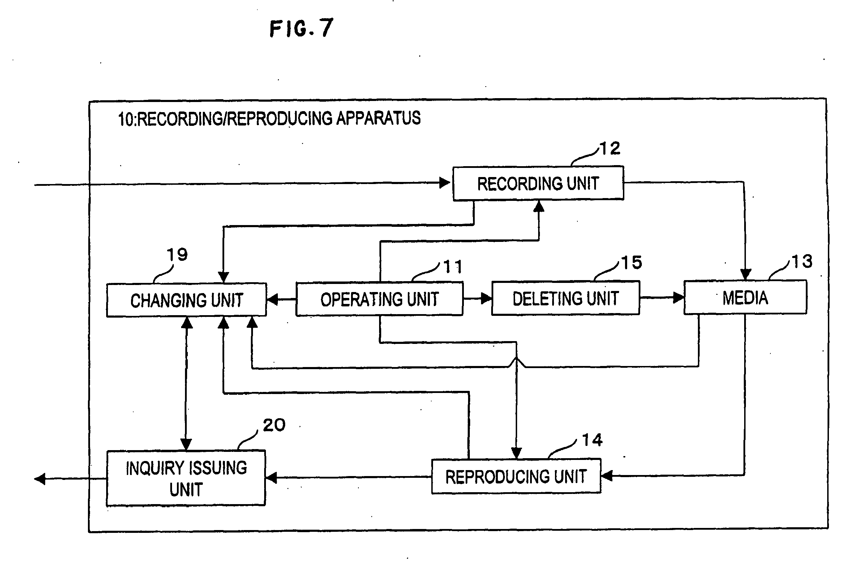

The recording/reproducing apparatus 10 in this embodiment is provided with the changing unit 19 as shown in Fig. 7. The changing unit 19 changes at least one of a procedure; a display method and contents of an inquiry and an inquiry issuing unit 20 issues a changed inquiry to a user when the changing unit 19 changes a form of the inquiry.

The changing unit 19 changes a form of an inquiry based on, for example, whether reproduction of a file is a chasing reproduction or an ordinary reproduction. The changing unit 19 can also obtain information on whether reproduction of a file is a chasing reproduction or an ordinary reproduction from either the recording unit 12 and the reproducing unit 14 or the operating unit 11. The inquiry issuing unit 20 issues an inquiry related to deletion only in a case of a chasing reproduction. In a case of an ordinary reproduction, the inquiry issuing unit 20 does not issue an inquiry related to deletion by changing a procedure of an inquiry with the changing unit 19.

When a change in procedure of an inquiry is performed in this way or in a case of a chasing reproduction, that is only when there is a high possibility of deletion of a file, an inquiry is issued. Therefore, in a case of a high possibility of deletion of a file, a user can delete the file in a simple and convenient manner, while no necessity arises for a user to respond to an inquiry in a case of a low possibility of file deletion.

Furthermore, the changing unit 19 may also change a form of an inquiry based on whether a different program related to a program which has been reproduced has been deleted or protected. For example, in a case where a program which has been reproduced is part of series programs, the different program of the series programs is associated with the program which has been reproduced. Programs sharing or analogous as to a genre or a keyword are associated with each other.

The inquiry issuing unit 20 here issues one inquiry related to deletion if a file of a different program as described above has not been recorded or has been deleted. On the other hand, if a file of the different program has not been deleted, the changing unit 19 changes a procedure and contents of an inquiry. Thereby, the inquiry issuing unit 20 issues an inquiry related to deletion and thereafter issues an inquiry related to reconfirmation.

This is because if neither a program which has been reproduced nor a different file associated therewith has not been deleted, the program which has been reproduced has a high possibility of no deletion.

The changing unit 19, when one of the series programs broadcast every week is reproduced, a different program thereof can be identified based on management information on data which has been recorded in the media 13. Since the management information includes information on every program as to a broadcast channel, a broadcast time zone, a broadcast day of the week and others, the changing unit 19 has only to confirm whether or not there are programs each having the three pieces of information coinciding with the others. In a case where a series identifier, a keyword, a genre and others of broadcast programs are also received by a receiver and the pieces of information are also added to the management information when a program is recorded, the changing unit 19 can also retrieve a program associated with the series using a keyword or a genre.

Furthermore, when management information as to only a program recorded at the time of interest is held in the media 13, the changing unit 19 can discriminate a case where a different program has not been deleted from a case where a different program has not been recorded even once or a case where a different program has been recorded and deleted after the recording. When a case where a different program has not been even once recorded is required to be discriminated from a case where a different program has been recorded and deleted after the recording, for example, the management information has only to be held even if the body data of a program has been deleted.

If the changing unit 19 changes a procedure and contents of an inquiry, the inquiry issuing unit 20 issues not only an inquiry to a user in relation to whether or not the file is deleted, but also a second inquiry to the user in relation to whether or not the file is deleted when the user responds to the first inquiry giving an instruction to the effect that the file is deleted. When an inquiry is issued as to "Do you delete this file?" in the dialogue shown in Fig. 5A and even if the user responds to selection of "YES" for the inquiry, a second inquiry including a comment is issued, for example, as to "A program recorded in the previous week has not been viewed and heard yet. Do you really delete this file?" For this inquiry, if the user does not select "YES," the deleting unit 15 does not delete the file in interest.

If the user gets familiar with issuance of an inquiry, there arises a risk that deletion is instructed by the user as usual if a form of the inquiry is the same as usual. By changing a form of an inquiry giving consideration to a careless deletion, a case can be avoided where the user wrongly deletes by mistake a program against the user's intention. In addition, if a different program file associated with a program which has been reproduced has been deleted or not recorded, an automatic inquiry is issued when reproduction of the program of interest ends; therefore a user can delete a file in a simple and convenient manner.

If a different program associated with a program which has been reproduced has been deleted, a possibility is high that the program which has been reproduced is deleted. Hence, in case where a different program associated with a program which has been reproduced has been deleted, the changing unit 19 changes in a similar manner to a change in an example of a chasing reproduction and only in the case, the inquiry issuing unit 20 may thereby issue an inquiry related to deletion. Furthermore, by changing contents of an inquiry with the changing unit 19, the inquiry issuing unit 20 issues an inquiry related to deletion when a different program file has been deleted, and the inquiry issuing unit 20 may issue an inquiry related to protect when the different program has not been deleted.

Moreover, a file also has a high possibility not to be deleted in cases where specific editing operations associated with a file are performed by a user, such as cases where a title of a program is inputted, where thumb nail screen images are set and where dubbing and editing of files are performed before the file is reproduced.

Therefore, the changing unit 19 may also change a form of an inquiry based on contents of an editing operation associated with the file which has been reproduced. The changing unit 19 acquires contents of an editing operation, for example, from an output of the operating unit 11 and compares of the contents with previously recorded contents, thereby enabling determination on whether or not a specific operation associated with the file which has been reproduced has been performed.

When it is determined that a specific operation has been performed in association with a file which has been reproduced, the changing unit 19 changes a form of an inquiry and thereby, an inquiry is issued, followed by reconfirmation in a similar manner to an example in which a different file related to the file which has been reproduced has not been deleted.

Note that an inquiry is not required only when a specific operation is performed in association with a program which has been reproduced and when a different program file associated with a program which has been reproduced has not been deleted. Since a procedure increases as compared with a case where an inquiry is issued without issuing an automatic inquiry, it can be avoided to delete a file that a user does not intend to delete.

In a case where a free capacity of the media 13 in which files have been recorded is sufficient, a necessity for deleting files is low. Therefore, the changing unit 19 may change a form of an inquiry based on a free capacity of a storage medium in which files have been recorded. The inquiry issuing unit 20 here issues an inquiry related to deletion only in a case where a free capacity of the media 13 at the time when reproduction of a file ends is equal to or less than a prescribed amount. As a prescribed amount, a default value may also be used or a value set by a user may also be used. The changing unit 19 changes a procedure of an inquiry if a free capacity of the media 13 is larger than the prescribed capacity at reproduction of a program ends; therefore, the inquiry issuing unit 20, similarly to an example of chasing reproduction, issues no inquiry related to deletion. With such a construction, there can be arisen less of a chance itself issuing an instruction by a user in response to an inquiry, further reducing a load imposed on the user.

Note that while in the above example, changes in a procedure and contents of an inquiry are performed, the changing unit 19 may change a display method of an inquiry. Changes in display method includes: a position, a shape and a color of a dialogue, a color and line width of letters in the dialogue, flashing display of the dialogue and others. Moreover, changes in procedure of an inquiry may include: a change in the order of inquiries in addition to the number of inquiries.

Furthermore, while in the above example, an inquiry is issued in relation to whether or not a file which has been reproduced is deleted, an inquiry may be also issued in relation to whether or not a different file is deleted. For example, in a case where recording date and time of a program which has been reproduced is one or more years ago, when a user selects "deletion" in response to an inquiry at the time when reproduction of the program ends, a display may be presented which includes an inquiry saying "other programs recorded one or more years ago are deleted?" A load on a user can be alleviated by issuing an inquiry related to other files associated with a program to be deleted in this way.

Furthermore, since a file for which "NO" has been selected for an inquiry related to deletion or protect has a high possibility of neither being deleted nor protected in the future, a file for which "NO" has been once selected may be set in the file management information with information meaning "having been selected." With such a procedure adopted, thereafter, even if the end of this file is detected, no inquiry is set so as to be issued in relation to file deletion or file protect as described above.

### (Fourth Embodiment)

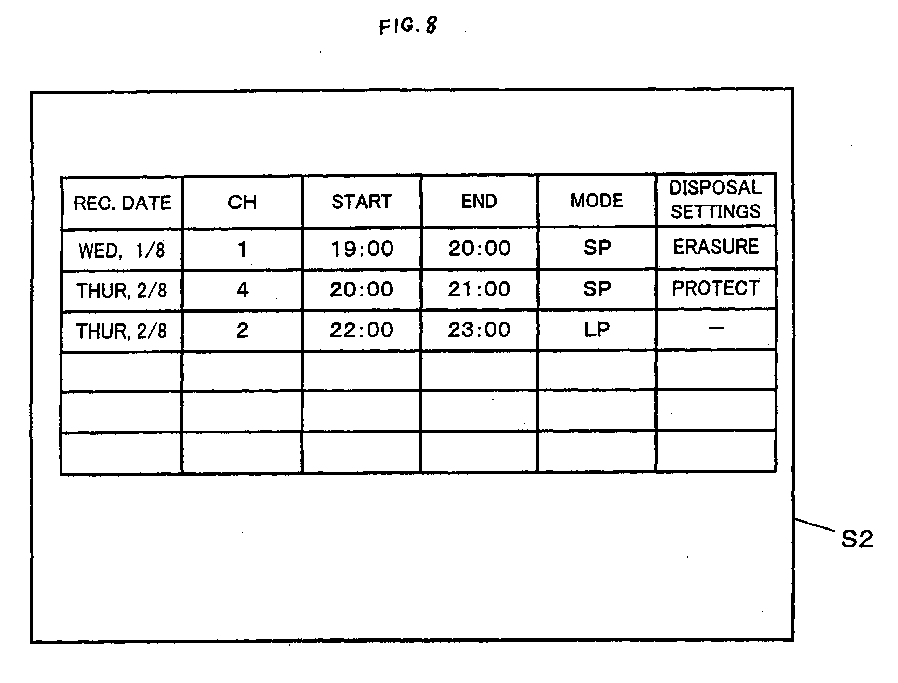

In this embodiment, in a recording reservation setting screen image S2, as shown in Fig. 8 , addition thereto is made of an item setting contents of disposal to be performed when reproduction ends. Objects for the disposal here are files for which recording reservation is made.

With such a construction, a user sets protect to a file of interest if the file is desired to be held, while, on the other hand, if the file may be deleted, the file is set to delete (or to deletion schedule). Though a user has a case where contents of disposal cannot be decided when recording reservation is made, in that case, for example, "-" is set, that is setting has only to be set to neither deletion nor protect.

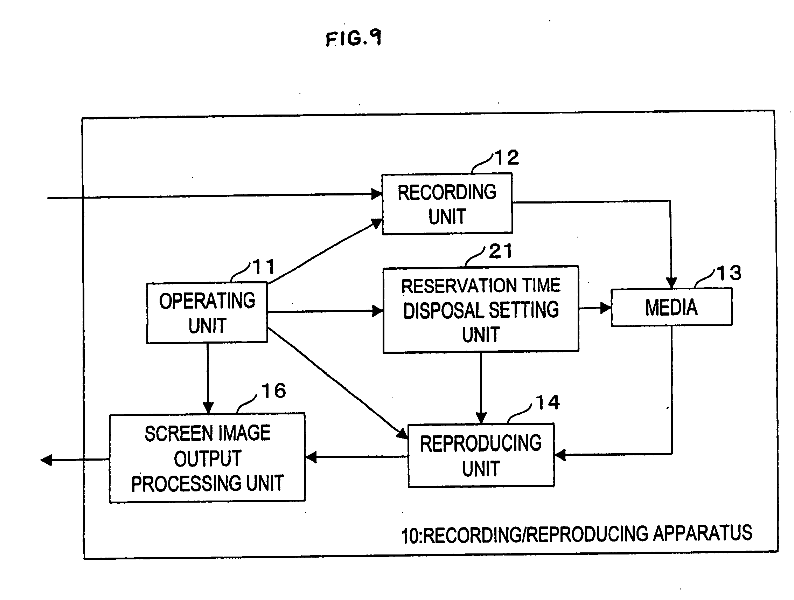

As shown in Fig. 9 , the recording/reproducing apparatus 10 in this embodiment is provided with a reservation time disposal setting unit 21 and the setting as described above is realized by the reservation time disposal setting unit 21. The reservation time disposal setting unit 21 is used for setting contents of disposal when reproduction of the file ends in a case where a user make a reservation for recording a file. A destination of setting may be either a memory (not shown) holding recording reservation information or the media 13.

When a user instructs to protect when reproduction ends, the reservation time disposal setting unit 21 having received this instruction performs setting of protect in file information of the program. It is natural that a timing at which protect is set in the file management information may be either when recording of the program starts or ends and there is no specific limitation. Note that in a case where a program for which setting of protect has been made has been reproduced up to the end thereof, no display of the dialogue D for file deletion is presented by the changing unit 19 in the third embodiment. The changing unit 19 changes a form of an inquiry based on contents of the set disposal, thereby enabling an instruction of a necessity or the like of an inquiry at a reservation time to be issued by a user.

On the other hand, when a user instructs to delete when reproduction ends, the reservation time disposal setting unit 21 which has received this instruction performs setting of deletion in the file management information of the program. It is natural that a timing at which setting of deletion is made in the file management information may also be either when recording of the program starts or ends, but there is not specific limitation on the timing. Note that when a program for which setting of deletion has been made in this way has been reproduced up to the end thereof, the file may be deleted or setting of delete schedule may be made to the file so as to be outwardly deleted.

Likewise, when a user issues an instruction of *"*delete schedule" when reproduction ends, the reservation time disposal setting unit 21 which has received this instruction performs setting of delete schedule in the file management information of the program. It is natural that a timing at which setting of delete schedule is made in the file management information may be either when recording of the program starts or ends but there is no specific limitation to the timing.

A file for which setting of "deletion schedule" has been made at the time when recording reservation has been made is deleted in a case where a prescribed time elapses or where a disk becomes short of a capacity even if no chance of reproduction has been given. This being considered, a form that setting of "delete schedule" can be made at the time when recording reservation is made is to be said effective for a scene where the program is not one really wanted by the user but one to be viewed if time allows the user to, that is a case where recording is performed of a program low in request for reproduction, and furthermore, effective for evaluating a degree of importance of a recorded file.

Furthermore, for a program for which even either setting of deletion or protect is not made, when the program has been reproduced up to the end thereof, displayed is the dialogue D for issuing an inquiry related to file deletion or protect.

As described above, in this embodiment, in the recording reservation setting screen image S2, an item is added for setting contents of disposal to be performed when reproduction ends. With such a construction, setting of whether or not a file is deleted or protected and setting of recording reservation can be collectively performed.

Note that while in the above description, if setting of file deletion or file protect is made when recording reservation is made, the file is automatically deleted or protected, there is no specific limitation in the present invention. That is, a procedure may be adopted in which the dialogue D for an inquiry related to file deletion or file protect is displayed and a user selects which. Then, a procedure may be adopted in which when the user has set nothing, file reproduction is simply terminated and no display of the dialogue D may be presented.

Furthermore, while exemplified in Fig. 8 is a form selectable concerning "deletion" "protect" or "nothing done" on one item, a plurality of setting items are produced, each of which may be able to be set independently of others. In addition, it is natural that both of "deletion" and "protect" are not required to be selected (that is, selection of one of "deletion" and "protect" will do).

As described above, since in the present invention, an inquiry related to file deletion is performed when reproduction ends, a procedure to delete a file can be greatly omitted as compared with a conventional practice. In addition, since a user judges whether or not a file should be deleted after contents of a program are known to the user, there also arises an effect that an inconvenience can be avoided that the user wrongly delete a program to be held by mistake.

Moreover, by changing a form of an inquiry based on a necessity of a reproduced file such as whether or not a file reproduction is a chasing reproduction, the user can delete a file in a simple and convenient manner and in addition, it is avoided to delete a file by mistake and less of a chance can be realized that the user responds to an inquiry for an inquiry without a necessity therefor.

By changing a form of an inquiry based on a free capacity of a storage medium in which files are recorded, an inquiry related to deletion can be performed when a necessity therefor is high.

In a case where a change in form of an inquiry is performed based on contents of disposal at the time of end of reproduction set when a reservation for recording of a file is made, a user can instruct a necessity for an inquiry when reservation is made.

When a specific operation is performed, disposal of a file can be determined in a simple and convenient manner when a user intends to by issuing an inquiry even if the end of reproduction of file is not detected.

Since in the present invention, an inquiry related to file protect is issued at the time when reproduction ends, a procedure to protect a file can be greatly omitted as compared with a conventional practice. In addition, since a user judges whether or not a file should be protected with his or her knowledge of contents of a program, there also arises an effect that an inconvenience can be avoided that a program that may be deleted is protected by mistake.

Even if an instruction to delete a file is received from a user, an actual deletion is temporarily not performed but deletion schedule information indicating that deletion of the file is scheduled is added to the file management information and furthermore, in a case where control is performed of display in a list of a file to which delete schedule information is set, the file can be revived, even if the user deletes it by mistake. In other equipment in which no control of a screen image output unit is performed, a file to which deletion schedule is set can also be displayed; therefore, a flexibility of disposal of a file in the equipment can also be secured.

Furthermore, in this case, by deleting a file to which delete schedule information is set based on at least one of a priority level for deletion and a free capacity in a storage medium, a sufficient possibility of revival of a file can be ensured in a range of a limited capacity of the storage medium.

## Claims

1. A recording/reproducing apparatus comprising:
a detecting unit (14) operable to detect the end of reproduction of a recorded file; and
an inquiry issuing unit (16), when the detecting unit (14) detects the end of reproduction of the file, to issue an inquiry related to deletion of the file to a user.

2. The recording/reproducing apparatus according to claim 1, further comprising:
a unit (15) operable to, in a case where an instruction to delete a file is received from a user for the inquiry, add deletion schedule information indicating that deletion of the file is scheduled to file management information to manage the recorded files; and
a screen image output processing unit (16) controlling whether or not a file to which the deletion schedule information has been set is displayed in a list.

3. The recording/reproducing apparatus according to claim 2, further comprising:
a deleting unit (15) operable to delete the file to which the delete schedule information has been set on the basis of at least one of a priority level of deletion and a free capacity in a storage medium in which files are stored.

4. A recording/reproducing method comprising:
a procedure of detecting the end of reproduction of a recorded file; and
a procedure of issuing an inquiry related to deletion of the file to a user when the end of reproduction of the file is detected.

5. A program for causing a computer to work as:
a detecting unit (14) operable to detect the end of reproduction of a recorded file; and
an inquiry issuing unit (16) operable to issue an inquiry related to deletion of the file to a user when the detecting unit detects the end of reproduction of the file.

## Patentansprüche

1. Aufnahme-/Wiedergabegerät mit:
einer Detektoreinheit (14), welche das Ende der Wiedergabe einer aufgezeichneten Datei feststellt, und
eine Anfrageausgabeeinheit (16), die dann, wenn die Detektoreinheit (14) das Ende der Wiedergabe der Datei feststellt, eine Anfrage bezüglich der Entfernung der Datei an einen Benutzer ausgibt.

2. Aufnahme-/Wiedergabegerät nach Anspruch 1, weiterhin umfassend:
eine Einheit (15), die im Fall, dass ein Benutzer der Anfrage einen Befehl zum Entfernen der Datei erhält, der Dateimanagementinformationen eine Entfernungslisteninformation hinzufügt, welche angibt, dass die Entfernung der Datei gelistet ist, um die aufgezeichneten Dateien zu managen, und
eine Schirmbildausgangsverarbeitungsschaltung (16) zur Steuerung, ob eine Datei, zu welcher die Entfernungslisteninformation hinzugesetzt worden ist, in einer Liste dargestellt werden soll oder nicht.

3. Aufnahme-/Wiedergabegerät nach Anspruch 2, weiterhin umfassend:
eine Entfernungsschaltung (15), welche die Datei entfernt, zu welcher die Entfernungslisteninformation hinzugesetzt worden ist, auf Grundlage eines Entfernungsprioritätspegels oder einer freien Kapazität in einem Speichermedium, in welchem die Dateien gespeichert sind.

4. Aufnahme-/Wiedergabe-Verfahren mit:
einem Verfahren zum Feststellen des Endes der Wiedergabe einer aufgezeichneten Datei und
einem Verfahren zur Ausgabe einer Anfrage bezüglich der Entfernung der Datei an einen Benutzer, wenn das Ende der Wiedergabe der Datei festgestellt worden ist.

5. Programm, um einen Computer arbeiten zu lassen als:
eine Detektoreinheit (14), welche das Ende der Wiedergabe einer aufgezeichneten Datei feststellt und,
eine Anfrageausgabeeinheit (16), welche an einen Benutzer eine Anfrage ausgibt bezüglich der Entfernung der Datei, wenn die Detektoreinheit das Ende der Wiedergabe der Datei feststellt.

## Revendications

1. Appareil d'enregistrement/reproduction comprenant :
une unité de détection (14) utilisable pour détecter la fin de la reproduction d'un fichier enregistré ; et
une unité d'émission d'une requête (16), lorsque l'unité de détection (14) détecte la fin de la reproduction du fichier, pour émettre une requête liée à l'effacement du fichier à un utilisateur.

2. Appareil d'enregistrement/reproduction selon la revendication 1, comprenant en outre :
une unité (15) utilisable pour, dans le cas où une instruction pour effacer un fichier est reçue d'un utilisateur pour la requête, ajouter des informations de programmation d'effacement indiquant que l'effacement du fichier est programmé, à des informations de gestion de fichiers pour gérer les fichiers enregistrés ; et
une unité de traitement de sortie d'image d'écran (16) commandant si oui ou non un fichier pour lequel des informations de programmation d'effacement ont été mises, est affiché dans une liste.

3. Appareil d'enregistrement/reproduction selon la revendication 2, comprenant en outre :
une unité d'effacement (15) utilisable pour effacer le fichier pour lequel des informations de programmation d'effacement ont été mises sur la base d'au moins un d'un niveau de priorité d'effacement et d'une capacité libre dans un support de stockage dans lequel des fichiers sont stockés.

4. Procédé d'enregistrement/reproduction comprenant :
une procédure de détection de la fin de reproduction d'un fichier enregistré ; et
une procédure d'émission d'une requête liée à l'effacement du fichier à un utilisateur lorsque la fin de la reproduction du fichier est détectée.

5. Programme pour entraîner un ordinateur à travailler comme :
une unité de détection (14) utilisable pour détecter la fin de la reproduction d'un fichier enregistré ; et
une unité d'émission d'une requête (16) utilisable pour émettre une requête liée à l'effacement du fichier à un utilisateur lorsque l'unité de détection détecte la fin de la reproduction du fichier.
